Europäisches Patentamt

(19) European Patent Office

Office européen des brevets

(11) Publication number: **0 313 263 B1**

## (12) EUROPEAN PATENT SPECIFICATION

(45) Date of publication of patent specification: **24.03.93**  (51) Int. Cl.5: **B29C 61/00**, C08J 5/18, //B29K27/18

(21) Application number: **88309542.4**

(22) Date of filing: **12.10.88**

(54) Rapid recoverable PTFE and a process for its manufacture.

(30) Priority: **19.10.87 US 110145**
        **23.09.88 US 248887**

(43) Date of publication of application:
    **26.04.89 Bulletin  89/17**

(45) Publication of the grant of the patent:
    **24.03.93 Bulletin  93/12**

(84) Designated Contracting States:
    **AT BE CH DE ES FR GB GR IT LI LU NL SE**

(56) References cited:
    **EP-A- 0 106 496        EP-A- 0 155 337**
    **DE-A- 2 739 705        US-A- 3 953 566**
    **US-A- 4 110 392        US-A- 4 596 837**

(73) Proprietor: **W.L. GORE & ASSOCIATES, INC.**
    **555 Paper Mill Road P.O. Box 9206**
    **Newark Delaware 19714(US)**

(72) Inventor: **House, Wayne D.**
    **Rt. 4 Box 948**
    **Flagstaff AZ 86001(US)**
    Inventor: **Myers, David J.**
    **HC75 Box 2476**
    **Camp Verde, AZ 86322(US)**

(74) Representative: **McCallum, William Potter et al**
    **Cruikshank & Fairweather 19 Royal Ex-**
    **change Square**
    **Glasgow G1 3AE Scotland (GB)**

## Description

This invention relates to porous polytetrafluoroethylene (hereinafter PTFE) materials having the property of rapid recovery and a method for producing these materials according to the preambles of claims 1 and 13. Recovery, in the context of this specification, refers to recovery from deformation, in particular stretching. The microstructure of the porous PTFE material consists of nodes interconnected by fibrils, substantially all of the fibrils having a bent or wavy appearance. Articles made from these materials are particularly suitable for use in the medical field, but are also useful in other areas such as filtration and fabric applications.

Strong, porous PTFE products and their method of manufacture were first described in U.S. Patent 3,953,566. Such products have found widespread acceptance in many fields. They are used in the medical field as replacement veins and arteries, as patch materials, as sutures and as ligaments. They have also found use in the fields of waterproof and breathable clothing, filtration, sealants and packings, and in threads and filaments for weaving and sewing. These products possess a microstructure of nodes interconnected by fibrils.

U.S. Patent 4,443,511 discloses a method of making a laminated fabric composed partly of porous PTFE that has improved elastic properties. This patent, however, only discloses how to make a stretchable laminated article but does not teach how to provide porous PTFE with the property of rapid recoverability.

According to the present invention there is provided a porous shaped article consisting essentially of polytetrafluoroethylene (PFTE), said article having a microstructure of nodes interconnected by fibrils, characterised in that said article is capable of being stretched and then rapidly recovering more than about 5.5% of its stretched length.

Preferably, the present invention provides an extruded expanded article, heat treated above its crystalline melt point made of a material consisting essentially of polytetrafluoroethylene (PTFE), said porous PTFE having been subsequently compressed at least 50% in the direction in which rapid recoverable characteristics are desired, restrained and heated.

According to a further aspect of the present invention, there is provided a process for making rapidly recoverable porous PTFE material comprising extruding a preformed billet of a mixture of coagulated dispersion of PTFE and liquid lubricant, expanding said material after removal of liquid lubricant by stretching said material longitudinally to produce a microstructure of nodes interconnected by fibrils, characterised in that the process comprises compressing said extruded and expanded PTFE in the direction of its fibrils to reduce its size and restraining said PTFE in its compressed state for a period of time sufficient to achieve a desired rapid recovery characteristic of more than about 5.5%.

The products of this invention are preferably made by taking shaped articles of porous PTFE which have been expanded by stretching and have been heated above their crystalline melt point, compressing these articles in a direction parallel to but opposite to that in which they were expanded by stretching, restraining the articles and heating them at a temperature above their crystalline melt point for a period of time, allowing them to cool, removing the restraint and restretching them in the direction of original stretch to approximately their original length.

Further embodiments of the invention are defined in the features of the dependent claims.

This invention will now be particularly described, by way of example, with reference to the accompanying drawings in which:-

Figure 1 is a schematic representation of the microstructure of porous PTFE known in the prior art;

Figure 2 is a schematic representation of the microstructure of the PTFE material of the present invention;

Figure 3 is a photomicrograph (taken at 500x magnification) of the surface of prior art PTFE material made in accordance with U.S. Patent No. 3,953,566 that was stretched in one direction;

Figure 4 is a photomicrograph (taken at 500x magnification) of the surface of PTFE material of the present invention;

Figure 5 is a photomicrograph (taken at 20x magnification) of the wall cross section of the PTFE material of the prior art;

Figure 6 is a photomicrograph (taken at 20x) of the wall cross section of the PTFE material made in accordance with the present invention;

Figure 7 is a schematic diagram of a compression procedure for Example 4;

Figures 8 and 9 are photomicrographs (taken at 500X) of the wall cross-section of the PTFE material of the prior art, and

Figures 10,11, 12 and 13 are photomicrographs (taken at 500X) of the wall cross-section of the PTFE material described in Example 1, Table 1, samples 1,2 and 3, and 4 respectively.

A method for producing porous PTFE products having a desirable rapid recovery property is provided. The porous products produced according to the invention are distinct from prior porous PTFE products in that they possess a rapid recovery property of greater than about 5.5%, i.e. they have a spring-like property. Furthermore, articles made by the present invention may undergo repeated applications of tensile loads and demonstrate approximately the same rapid recovery after each successive load application and removal cycle.

Rapid recovery as herein defined is the difference between the extended length of the material and the recovered length with respect to the recovered length. The extended length is the length of material under tensile load and recovered length is the length of material measured 5 seconds after release of the tensile load.

An advantage possessed by rapid recoverable PTFE tubes made according to this invention is the improved bending characteristics demonstrated over the previous porous PTFE tubes. These tubes also show improved resistance to kinking, constriction or collapse under flexure.

The porous PTFE material that provides the precursor for this invention may be produced by the method described in U.S. Patent No. 3,953,566. Using this method, a liquid lubricant is mixed with a commercially available powder of PTFE, and the mixture is extruded by a ram-type extruder or other type of extruder. The material is then expanded by rapid stretching either uniaxially, biaxially, or multiaxially after the liquid lubricant is removed from it.

The material after stretching is then heated while restrained to a temperature above the crystalline melt point of the polymer and held there for a period of time. The time and temperature will vary depending on the amount of material being heated. In general, the higher the temperature used, the shorter the time. A strong porous material is produced. This material having undergone uniaxial expansion has a microstructure of nodes interconnected by fibrils that are essentially parallel and straight.

While this invention can be used with products that have been biaxially or multi-axially stretched, the description that follows will describe a uniaxially stretched article.

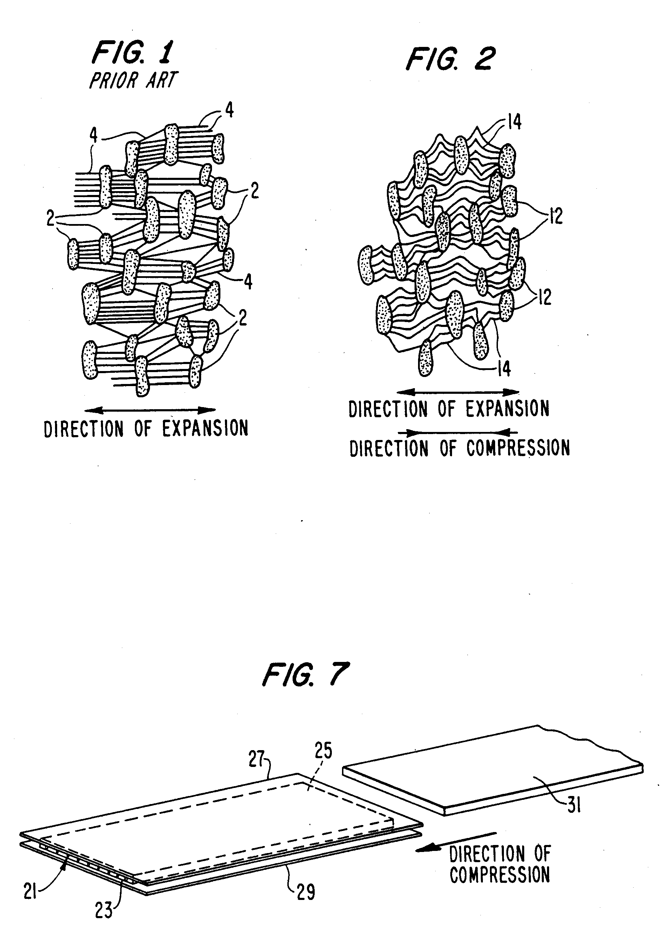

Figure 1 is a schematic plan view of a section of a uniaxially expanded PTFE material produced using the techniques disclosed in the 3,953,566 patent. This section as seen under a microscope is depicted as possessing many nodes 2 interconnected by many fibrils 4. This shows the microstructure in which the longitudinal axes of the fibrils are all substantially parallel to the direction of expansion.

This precursor material is compressed in the direction parallel to but opposite to the direction in which it was originally expanded by stretching. The amount of compression depends on the nature of the shaped article and the desired product. In one embodiment the shaped article is compressed up to the point just prior to when it starts to become wrinkled or crimped. In this embodiment the shaped article is compressed to less than about one half of its original length and preferably to less than about one quarter of its original length. A second embodiment continues the compression such that wringles or crimps are intentionally created. In a third embodiment, the shaped article may be compressed to a lesser extent so that it is less than its original length but greater than half of its original length. In this third case the rapid recovery characteristic is greater than that of the precursor article, however, less than that for a more compressed article.

The percent compression is calculated from the following equation:

$$C\% = \frac{[l_o - l_c]}{l_o} \times 100\%$$

where $l_o$ is the original length of the precursor material and $l_c$ is the compressed length.

The material is then restrained in its compressed state and heated in an oven at an oven temperature in the range of 100° to 400°C with the most preferred oven temperature being about 380°C. The heating may be done in a variety of types of ovens. The period of time during which the compressed article is heated may vary, but in any event, the lower the temperature, the longer time the article must be restrained. The time required for heating also may vary depending on oven temperature, type of oven, and mass of the material.

While it is preferable to utilize a heating step, the material exhibits the rapid recovery characteristic if it is compressed and restrained at room temperatures, but it must be restrained for long periods of time, at least several days.

After the compressed material has been heated, it is cooled thereby to about 23°C. Cooling may occur through natural air currents, or by forced cooling.

After cooling, the restraint is removed. Removal of the restraint prior to cooling of the compressed porous PTFE article may cause the article to lose some rapid recovery characteristics. The material is then restretched in the direction of original stretch to approximately its original length.

While the foregoing has described the starting material for this invention as porous PTFE materials which have been heated above their crystalline melt point, porous PTFE materials which have not been so heated may also be used. These materials, however, do not demonstrate the range of rapid recovery found in heat treated materials but they do demonstrate rapid recovery greater than that exhibited by precursor PTFE materials.

PTFE fibrils of any length in the article of this invention demonstrate the rapid recovery phenomenon; preferably, however, the fibrils in the article of this invention have an average length of less than 100 $\mu$.

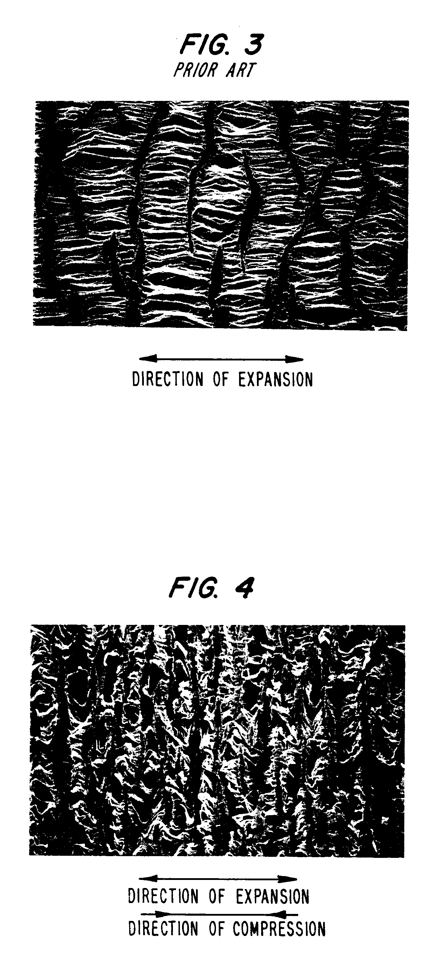

The porous PTFE with rapid recovery is best understood by reference to the drawings provided. Figure 2 is a schematic plan view of a section of expanded PTFE made according to this invention as seen under a microscope. Therein, nodes 12 are interconnected by fibrils 14. It is clearly seen that unlike the fibrils in Figure 1, substantially all of the fibrils in Figure 2 have a bent or wavy appearance. Figure 3 and 4 are photomicrographs of PTFE materials made in accordance with the teachings of the prior art and that made in accordance with present invention respectively. Figure 3 is a photomicrograph of the precursor tube that was subsequently compressed, restrained, heat treated and restretched in the direction of original stretch to approximately its marginal length, as shown in Figure 4.

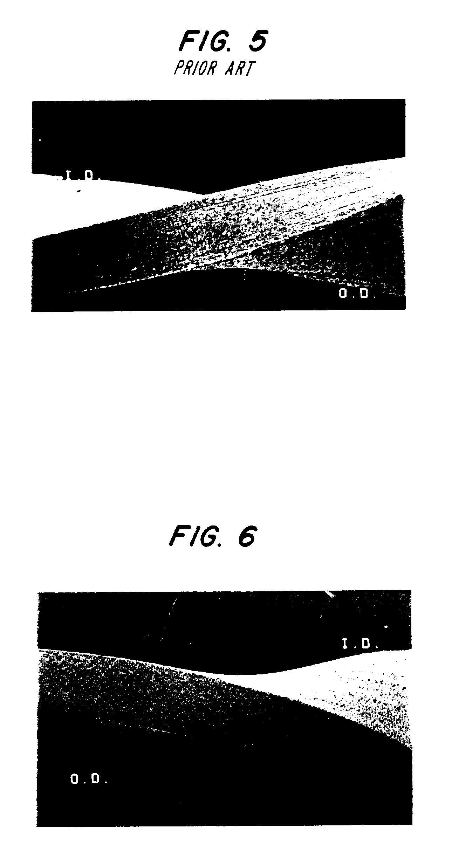

Although the microstructure, specifically substantially all of the fibrils, undergoes a change in appearance, the overall appearance to the naked eye remains substantially unchanged. Figure 5 is a photomicrograph of the wall cross section of the precursor PTFE tube material. Figure 6 is a photomicrograph of the wall cross section of the PTFE tube material processed in accordance with the steps of this invention. That product shows smooth surfaces similar to those found in the precursor materials. One embodiment of the present invention is where the macrostructure (external surfaces and for a tube, external and internal surfaces) of the material does not demonstrate any apparent visible change in appearance. In an alternative embodiment the exterior surface and/or interior surfaces of the PTFE material can be modified to produce a corrugated or rough surface.

Finished products made according to the method of this invention may include articles such as films, membranes, sheets, tubes, rods, and filaments. Sheets may also be made by slitting tubes longitudinally.

Porous rapid recoverable materials, including tubes, films, membranes, or sheets, maintain their hydrophobic nature and are also permeable to water vapour, causing them to be waterproof and breathable. They may be laminated, impregnated, and bonded to other materials and fabrics to provide composite structures having rapid recovery properties in addition to the known properties attributed to expanded PTFE. These rapidly recoverable PTFE articles are useful in the medical field in applications such as vascular grafts, in fabric applications, as well as in filtration areas.

An Instron tensile tester was used for all testing. All tests were performed at a temperature of 23°C ± 2°C. Each sample was cut in half transversely so that one part could be used to determine the maximum tensile force and the other to determine the rapid recovery. A crosshead speed of 500 mm/min and initial grip separation of 150 mm was used for all tests.

For samples that are too small to accommodate the 150 mm grip separation and allow enough material within the grips to prevent slippage of the sample within the grips, other combinations of crosshead speed and grip separation may be used provided the ratio of crosshead speed to initial grip separation is equal to 3.33 minutes $^{-1}$. By maintaining the ratio of crosshead speed to initial grip separation constant, all tensile tests are performed at a strain rate of 333%/minute.

First the maximum tensile force of one half of the sample material was determined. This was done on the Instron tester using standard pneumatically actuated cord grips. Sample breaks occurred away from the edge of the grips. The maximum tensile force was measured for tubes, rods and sheets per the examples. For the sheet example, the sheet was folded in half longitudinally and placed between the cord grips.

To apply 1% of the maximum tensile force, the cord grip were removed and replaced with pneumatically actuated flat rubber-faced grips. The other half of the sample (in either tube or rod form, or unfolded sheet, per the examples) was placed between these grips and a tensile load of 1% of the previously determined break force or maximum tensile force was applied using identical grip separation and strain rate as described above.

The length ($l_t$) of the sample while under the 1% of maximum tensile force was determined as the distance of the grip separation. Alternatively, length ($l_t$) may be measured from the Instron tester's chart recorder.

Immediately after reaching a tensile load equivalent to 1% of the maximum tensile force, the lower Instron grip was quickly released in order to allow the sample to recover. Five seconds after the release of tension, the actual length ($l_r$) of the sample that had been between the grips of the tester was measured. The percent rapid recovery was then calculated from the following equation:

$$R.R\% = \frac{(l_t - l_r)}{l_r} \times 100\%$$

where $l_t$ was the test sample length under tensile load and $l_r$ was the test sample length measured 5 seconds after release of tensile load.

Wall thickness measurements of the precursor tubes were taken by cutting a 2.5cm long sample from the end of the tube sample with a razor blade. This sample was then smoothly fitted over a stainless steel mandrel of outside diameter corresponding to the inside diameter of the tube. The thickness measurement was made using a profile projector to measure the distance from the outer surface of the mandrel to the outer surface of the cut end of the tube sample. Measurements were made at three places spaced approximately 120° apart around the circumference of the tube. The wall thickness of the sample was taken as the mean of these three measurements.

The fibril length of the test samples in the examples following was determined by photographing the surface of the sample under 200x magnification. Two parallel lines were drawn 12mm above and below the longitudinal centerline of the photographs, parallel to the direction of the fibrils. Following the top edge of the upper line and starting from the left margin of the photograph, the distance from the right edge of the first distinct node to the left edge of the second distinct node was measured as the first fibril length. Measurements were made using dividers referenced to a scale that accounted for the magnification factor.

Five consecutive fibril length measurements were made in this manner along the drawn line. The photograph was rotated 180° and five consecutive fibril length measurements were taken from the left margin of the photograph along the top edge of the second drawn line. The mean fibril length of the sample was taken to be the mean of the ten photograph measurements.

Both wall thickness and fibril length measurements were made on the precursor tubes prior to the inventive steps being applied.

The following examples which disclose processes and products according to the present invention are illustrative only and not intended to limit the scope of the present invention in any way.

EXAMPLE 1

RAPIDLY RECOVERABLE EXPANDED PTFE TUBES

CD123 fine powder PTFE resin (obtained from ICI Americas) was blended with 150cm$^3$ of ISOPAR M (Trade Mark), odorless solvent (obtained from the Exxon Corporation), per pound of PTFE resin. The mixture was compressed into a tubular billet, heated to about 60°C and extruded into tubes in a ram extruder having a reduction ratio of about 240:1. Lubricant was removed from the extrudate by drying in a forced convection air oven at 250°C for thirty minutes. The tubes were then expanded by stretching utilizing the stretching technology taught in U.S. Patent 3,953,566. Sample tubes 1,2,3 and 5 in Table 1 were expanded 8.4:1, at a rate of about 50% per second in a forced convection air oven at a temperature of 290°C. These tubes had fibril lengths of about 35 microns. Sample tubes 4 were expanded 2.3:1, at a rate of about 160% per second in a forced convection air oven at a temperature of 290°C. These tubes had a fibril lengths of about 10 microns. All tubes, except sample 5, were subsequently heat treated in a gravity convection air oven for 90 seconds at 393°C. All tubes had a 10mm inside diameter.

One tube of each type was retained as a control sample. Percent rapid recovery measurements for the control or precursor tube are shown in comparison to tubes processed with the method of this invention in Table 1.

Tubes were fitted over stainless steel mandrels of 10mm outside diameter. One end of each tube was secured to its mandrel with a restraining wire. The free end of each tube sample was pushed by hand longitudinally toward the restrained end of the tube, thus compressing the tube sample longitudinally. The percentages of compression for each sample were calculated with the formula described above and are presented in Table 1. Each tube sample was compressed uniformly without wrinkling or otherwise distorting the exterior surface. The free end of each tube was secured to the mandrel with a second restraining wire. Each tube and mandrel assembly was placed in a gravity convection air oven for a predetermined time and oven temperature, both parameters of which are presented in Table 1. Each tube and mandrel assembly

5

was removed from the oven and allowed to cool to about 23°C. The restraining wires for each assembly were removed and the tubes were removed from their mandrels. Each sample was restretched in the direction of original stretch to approximately its original length and allowed to recover for at least one hour. Percent rapid recovery was calculated for each tube using the equation previously described. Results of the percent rapid recovery are summarized in Table 1.

Table 1

RAPID RECOVER TUBES

| Sample | Precursor Tube Characteristics (Control) | | | | | Inventive Process Parameters | | | Inventive Tube Rapid Recovery Characteristics | |
|---|---|---|---|---|---|---|---|---|---|---|
| | Wall Thickness (mm) | Mean Fibril Length Micron | Prior Heat Treatment to above crys melt point | 1% of Max Tensile Force (kg) | % Rapid Recovery | % Compression | Oven Temp °C | Time Heated (min) | 1% of Max Tensile Force (kg) | % Rapid Recovery |
| 1 | .0 | 29 | Yes | .66 | 3.8 | 84 | 380 | 3 | .53 | 22.3 |
| 2 | 1.0 | 32 | Yes | .63 | 3.7 | 50 | 380 | 3 | .57 | 5.7 |
| 3 | 1.2 | 39 | Yes | .69 | 1.2 | 85 | 100 | 3000 | .63 | 16.9 |
| 4. | 1.1 | 10 | Yes | .88 | 3.3 | 66 | 380 | 3 | .68 | 19.5 |
| 5. | .7 | 31 | No | .38 | 3.2 | 72 | 300 | 10 | .28 | 5.8 |

6

EXAMPLE 2

RODS

A rod of one quarter-inch (0.635 cm) nominal diameter GORE-TEX (Trade Mark) Joint Sealant, available commercially from W. L. Gore and Associates, Inc., Elkton, MD, was used as the precursor porous PTFE material to be processed by the method of this invention. This material had not been heated above its crystalline melt point.

A portion of the test sample was cut off and retained as a control for determination of the percent rapid recovery of the precursor material. A second sample of 300 mm length was placed into a thinwall stainless steel tube of .21″ (0.53 cm) inside diameter and compressed manually achieving a 67% compression. This compression was maintained by use of a plug restraint. The assembly was heated in a gravity-convection air oven to an oven temperature of about 300°C for 15 minutes while the sample was restrained in its compressed state. The assembly was removed from the oven and allowed to cool to approximately 23°C. The restraint was removed and the sample was removed from the stainless steel tube. The sample was restretched in the direction of original stretch to approximately its original length by hand and allowed to recover for more than one hour. Percent rapid recovery measurements were made both of control samples and samples processed according to the inventive steps described above. Measurements and calculations were made utilizing the percent rapid recovery as defined in the specification. Results are shown in Table 2.

Table 2

| Sample | Mean Fibril Length (Micron) | 1% of Max Tensile Force (kg) | % Rapid Recovery | Inventive Process Parameters | | | 1% of Max Tensile Force (kg) | Inventive Rod % Rapid Recovery |
|---|---|---|---|---|---|---|---|---|
| | | | | % Compression | Oven Temp °C | Time Heated (min) | | |
| Control Rod | 41 | .29 | 2.0 | --- | -- | -- | -- | --- |
| Inventive | -- | -- | --- | 67 | 300 | 15 | .24 | 6.7 |

EXAMPLE 3

REPEATABILITY

A rapidly recoverable tube (sample 1) from Example 1 was stretched 10 times in order to determine the range of % rapid recovery for a sample that has been exposed to repeated elongations. The sample was placed between the grips of the Instron tensile tester with a grip separation of 150 mm. Crosshead speed was set at 500 mm/min to provide a strain rate of 333% per minute. The Instron machine was programmed to stop its crosshead travel upon achieving .53 kg tensile load similar to that of Example 1, sample 1. The length ($l_t$) of the sample while under the 1% of maximum tensile force was determined by measuring the distance between the grips. Alternatively, lenth ($l_t$)may be measured from the Instron's chart recorder. When the crosshead stopped, the lower grip of the Instron was released, freeing the sample and allowing it to recover in length. Five seconds after the sample was freed from the lower Instron grip, the actual length $l_r$ of the sample that had been between the grips of the Instron was measured and recorded. The crosshead was returned to its starting position to again provide a grip separation of 150 mm. The sample was again clamped between the lower grips of the Instron tester at the same point on the sample. Sixty seconds after the first application of tension, 0,53 kg tension was again applied and the entire test was repeated. This was done a total of ten times, with $l_t$ and $l_r$ being measured and recorded each time. Percent rapid recovery was calculated as previous defined for each tension application. The results are presented in Table 3.

Table 3

| Test Run | % Rapid Recovery |
|----------|------------------|
| 1 | 21.8 |
| 2 | 22.2 |
| 3 | 20.4 |
| 4 | 20.4 |
| 5 | 20.3 |
| 6 | 20.3 |
| 7 | 20.9 |
| 8 | 20.3 |
| 9 | 19.7 |
| 10 | 19.1 |

EXAMPLE 4

FLAT SHEET

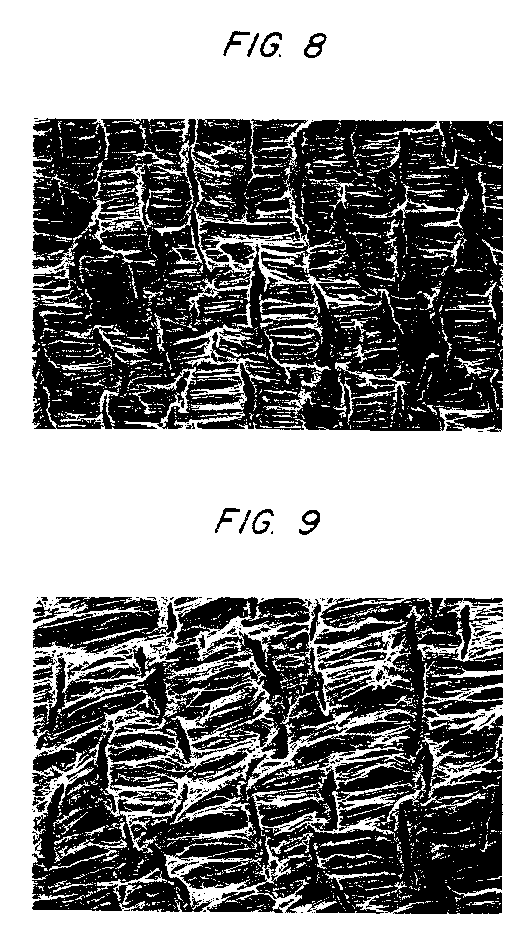

Flat rectangular sheets of expanded PTFE were obtained by longitudinally slitting a 10 mm inside diameter tube made in the same manner as the precursor tube of Example 1, Sample 1. One of these sheets was retained as control sample for determination of its percent rapid recovery. Referring to Figure 7, a second sample sheet 21 was clamped between two thin stainless steel plates 27 and 29 separated to about 0.9 mm from each other. One end edge 23 of the sample sheet 21 was restrained from moving. The opposite end edge 25 was moved towards the restrained end edge with the use of a stainless steel plate 31 thus compressing the sheet of material in the direction of the fibrils, i.e. in the direction parallel to but opposite to the direction it had been stretched. The material was compressed 83%. The compressed sample was restrained and the assembly was heated in a gravity convection air oven at a temperature of about 380°C for about 5 minutes. After removal from the oven, the assembly was allowed to cool to about 23°C and the sheet sample was removed from between the plates. The sample was restretched in the direction of original stretch to approximately its original length and allowed to recover for more than one hour. The percent rapid recovery was measured and calculated using the formula previously described. Results are both inventive and control samples are shown in Table 4.

Table 4

| Sample | Thickness (mm) | Mean Fibril Length (Micron) | 1% of Max Tensile Force (kg) | % Rapid Recovery | Process Parameters according to the invention | | | 1% of Max Tensile Force (kg) | % Rapid Recovery |
|---|---|---|---|---|---|---|---|---|---|
| | | | | | % Compression | Oven Temp °C | Time Heated (min) | | |
| Control | 1.0 | 44 | .63 | 2.0 | --- | -- | --- | -- | --- |
| Inventive | --- | -- | --- | --- | 83 | 380 | 5 | .48 | 16.4 |

EXAMPLE 5

RAPID RECOVERABLE EXPANDED PTFE TUBES FIBRIL MEASUREMENTS

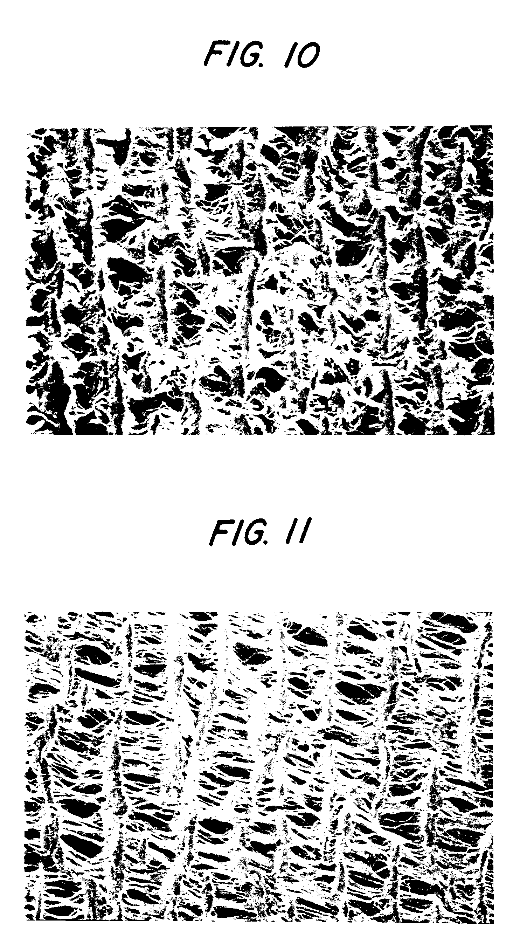

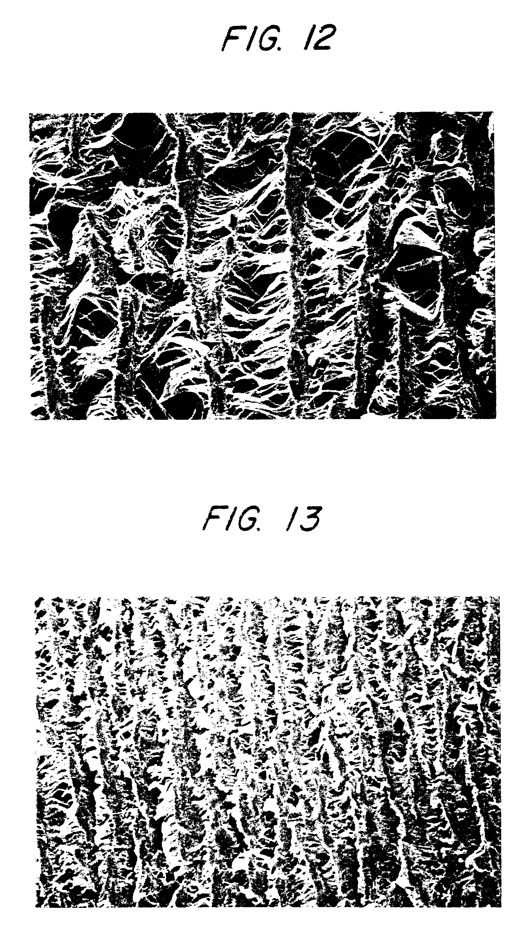

Sample 1,2,3 and 4 of Example 1 were further evaluated to estimate the amount of bending that was imparted to the fibrils by the rapid recovery process. SEM photos taken at 500X (Figures 8,9,10,11,12 and 13) were made of the wall cross-section of each sample. Figures 8 and 9 are photomicrographs of precursor samples having fibril lengths of 10 micrometers and 30 micrometers respectively. Each sample was prepared by cutting a segment and allowing it to relax for a sufficient amount of time, in this case 24 hours. A relaxed state is where the sample segment is under no tension or compression. Each sample was mounted and maintained in its relaxed state.

SEM photos were taken at magnification levels of 500X. Two important factors in determining the magnification level include resolution and fibril sampling. The photographs taken showed between five and ten complete sequential sets of fibrils.

Photomicrographs were marked with two parallel drawn lines spaced 24mm apart, approximately centred on the photograph and oriented so that the lines were substantially parallel to the direction of the fibrils. Moving from left to right along the top drawn line, internodal distance "H" was determined to be the distance between the node attachment points of the first distinct fibril closest to the drawn line. A distinct fibril is one whose complete length can be visually distinguished. Vertical displacement, a distance "V", was next measured as the perpendicular length from distance "H" to the farthest point on the fibril. If the fibril crossed distance "H" one or more times, the distance "V" was determined to be the sum of the maximum perpendicular "V" measurements. The ratio of V/H was calculated for the fibril. Moving to the right along the drawn line, "V" and 'H' measurements were determined for four additional fibrils. The photograph was rotated 180° and the process was repeated for five additional fibrils. Mean values of "V" and "H", and V/H were calculated for all ten fibrils examined. Measurement results are summarised in Table 5.

Table 5

| Sample | Fibril Length $\mu$ | Precursor Tube | | | Inventive Tube | | |
|--------|---------------------|----------------|--------|-----|----------------|--------|------|
|        |                     | V($\mu$)       | H($\mu$) | V/H | V($\mu$)     | H($\mu$) | V/H  |
| 1      | 29                  | 1.16           | 25.5   | 0.05 | 4.51          | 15.8   | 0.28 |
| 2      | 32                  | 1.08           | 31.9   | 0.03 | 3.37          | 22.7   | 0.15 |
| 3      | 39                  | 1.08           | 31.9   | 0.03 | 5.04          | 24.4   | 0.21 |
| 4      | 10                  | 1.96           | 20.3   | 0.09 | 3.10          | 8.32   | 0.37 |

**Claims**

1. A porous shaped article consisting essentially of polytetrafluoroethylene (PFTE), said article having a microstructure of nodes interconnected by fibrils, characterised in that said article is capable of being stretched and then rapidly recovering more than about 5.5% of its stretched length.

2. An article according to claim 1, wherein substantially all of said fibrils have a bent appearance.

3. An article as claimed in claim 2, in which said fibrils have a V/H ratio of at least 0.15.

4. An article as claimed in claims 1 to 3, in which the PTFE is extruded and expanded, characterised in that the PTFE is subsequently compressed in the direction in which rapid recovery characteristics are desired and restrained for a period of time sufficient to achieve the desired rapid recovery characteristics.

5. An article as claimed in claim 4 wherein the PTFE was subsequently compressed by at least 50%, or 60%, or 75%, or 90% in the direction of desired rapid recovery characteristics.

6. An article according to any one of claims 1 to 5, in which said article has a rapid recovery of greater than 6%, or 8%, or 10%, or 15%, or 20%, or 22%, or 25%, or 30%, or 50% or 75%.

7. An article as claimed in claim 4, in which the article is in the form of a tube characterised in that

(a) the tube has been compressed to less than 50% of its original length and restrained;

(b) the tube has been heated at an elevated temperature for a period of time;

(c) said tube has been subsequently cooled; and

(d) said tube has been stretched to approximately its original length having a rapid recovery in excess of about 5.5%.

8. An article according to any preceding claim, in which the article is in the form of a tube having smooth inside and outside surfaces.

9. An article according to any of claims 1 to 7, in which the article is in the form of a tube in which the inside surface and the outside surface have differing surface characteristics.

10. An article as claimed in any preceding claim, in which the article is a vascular graft.

11. An article according to any of claims 1 to 7, in which the article has been formed as a tube and subsequently slit longitudinally and opened to form a sheet.

12. An article according to any of claims 1 to 6, in which the article is in the form of a sheet, a rod, a film or a filament.

13. A process for making rapidly recoverable porous PTFE material comprising extruding a preformed billet of a mixture of coagulated dispersion of PTFE and liquid lubricant, expanding said material after removal of liquid lubricant by stretching said material longitudinally to produce a microstructure of nodes interconnected by fibrils, characterised in that the process comprises compressing said extruded and expanded PTFE in the direction of its fibrils to reduce its size and restraining said PTFE in its compressed state for a period of time sufficient to achieve a desired rapid recovery characteristic of more than about 5.5%.

14. A process as claimed in claim 13 wherein said compressed PTFE is heated to an elevated temperature.

15. A process as claimed in claim 14, wherein said compressed PTFE is heated to a temperature above its crystalline melt point.

16. A process as claimed in claims 13 or 14, in which the PTFE is in the form of a tube, comprising the steps

(a) compressing and restraining said tube to less than about 50% of its original length;

(b) maintaining the tube in a compressed and restrained state for a period of time; and

(c) stretching the tube to approximately its original length.

**Patentansprüche**

1. Ein poröser geformter Gegenstand, bestehend im wesentlichen aus Polytetrafluorethylen (PTFE), wobei dieser Gegenstand eine Mikrostruktur von Knoten aufweist, die untereinander durch Fibrillen verbunden sind,

dadurch gekennzeichnet,

daß der Gegenstand dehnungsfähig und sodann um mehr als ungefähr 5,5 % seiner gedehnten Länge schnellrückstellbar ist.

2. Gegenstand nach Anspruch 1, bei welchem im wesentlichen alle der Fibrlllen ein gebogenes Aussehen aufweisen.

3. Gegenstand nach Anspruch 2, bei welchem die Fibrillen ein V/H-Verhältnis von mindestens 0,15 aufweisen.

4. Gegenstand, wie in den Ansprüchen 1 bis 3 beansprucht, bei welchem das PTFE extrudiert und expandiert ist,

dadurch gekennzeichnet,
daß das PTFE anschließend in derjenigen Richtung komprimiert wird, in welcher die Schnellrückstellungs-Eigenschaften erwünscht sind, und für eine Zeitperiode eingespannt wird, die ausreichend ist, um die erwünschten Schnellrückstellungs-Eigenschaften zu erzielen.

5. Gegenstand nach Anspruch 4, bei welchem das PTFE nachfolgend um mindestens 50 % oder 60 % oder 75 % oder 90 % in der Richtung der erwünschten Schnellrückstellungs-Eigenschaften komprimiert wurde.

6. Gegenstand nach einem der Ansprüche 1 bis 5, bei welchem dieser Gegenstand eine Schnellrückstellung von mehr als 6 % oder 8 % oder 10 % oder 15 % oder 20 % oder 22 % oder 25 % oder 30 % oder 50 % oder 75 % aufweist.

7. Gegenstand nach Anspruch 4, bei welchem der Gegenstand in Form eines Rohres vorliegt, dadurch gekennzeichnet, daß

   (a) das Rohr bis zu weniger als 50 % seiner Originallänge komprimiert und sodann eingespannt worden ist;
   (b) das Rohr bei einer erhöhten Temperatur für eine Zeitspanne erwärmt worden ist;
   (c) das Rohr daraufhin abgekühlt worden ist; und
   (d) das Rohr angenähert bis zu seiner ursprünglichen Länge gedehnt worden ist, welche eine Schnellrückstellung von mehr als ungefähr 5,5 % aufweist.

8. Gegenstand nach einem der vorhergehenden Ansprüche, bei welchem der Gegenstand in der Form eines Rohres mit glatten innen- und außenseitigen Oberflächen vorliegt.

9. Gegenstand nach einem der Ansprüche 1 bis 7, bei welchem der Gegenstand in der Form eines Rohrs vorliegt, bei welchem die innenseitige Oberfläche und die außenseitige Oberfläche unterschiedliche Oberflächencharakteristika aufweisen.

10. Gegenstand wie in einem der vorhergehenden Ansprüche beansprucht, bei welchem der Gegenstand ein Gefäßtransplantat ist.

11. Gegenstand nach einem der Ansprüche 1 bis 7, bei welchem der Gegenstand als ein Rohr geformt und nachfolgend längsgeschlitzt und geöffnet worden ist, um eine Folie zu bilden.

12. Gegenstand nach einem der Ansprüche 1 bis 6, bei welchem der Gegenstand in der Form einer Folie, eines Stabs, eines Films oder eines Fadens vorliegt.

13. Verfahren zur Herstellen von schnellrückstellbarem porösem PTFE-Material, mit den Verfahrensschritten: Extrudieren einer vorgeformten Tablette oder Puppe aus einer Mischung aus einer koagulierten Dispersion von PTFE und einem flüssigen Gleitmittel; Expandieren dieses Materials nach dem Entfernen des flüssigen Gleitmittels durch Dehnen des Materials in der Längsrichtung, um eine Mikrostruktur von untereinander durch Fibrillen verbundenen Knoten herzustellen, dadurch gekennzeichnet, daß das Verfahren die Verfahrensschritte aufweist: Komprimieren des extrudierten und expandierten PTFE in Richtung seiner Fibrillen, um seine Abmessung zu reduzieren, und Einspannen des PTFE in seinem komprimierten Zustand für eine Zeitperiode, welche ausreichend ist, um die erwünschte Schnellrückstellungs-Eigenschaft von mehr als ungefähr 5,5 % zu erzielen.

14. Verfahren wie in Anspruch 13 beansprucht, bei welchem das komprimierte PTFE bis zu einer erhöhten Temperatur erwärmt wird.

15. Verfahren wie in Anspruch 14 beansprucht, bei welchem das komprimierte PTFE bis zu einer Temperatur oberhalb seines kristallinen Schmelzpunkts erwärmt wird.

16. Verfahren wie in den Ansprüchen 13 oder 14 beansprucht, bei welchem das PTFE in der Form eines Rohres vorliegt, mit den folgenden Verfahrensschritten:

(a) Komprimieren und Einspannen des Rohres bis zu weniger als ungefähr 50 % seiner ursprünglichen Länge;

(b) Halten des Rohres in einem komprimierten und eingespannten Zustand für eine Zeitperiode; und

(c) Dehnen des Rohres ungefähr bis zu seiner ursprünglichen Länge.

**Revendications**

1. Un article formé poreux consistant essentiellement en polytétrafluoréthylène (PTFE), ledit article possédant une microstructure de noeuds interconnectés par des fibrilles, caractérisé en ce que ledit article est susceptible d'être étiré et de récupérer ensuite rapidement plus de environ 5,5% de sa longueur étirée.

2. Un article selon la revendication 1, dans lequel sensiblement toutes les fibrilles présentent une apparence cintrée.

3. Un article selon la revendication 2, dans lequel le rapport V/H desdites fibrilles est d'au moins 0,15.

4. Un article selon l'une des revendications 1 à 3, dans lequel le PTFE est extrudé et mis en expansion, caractérisé en ce que le PTFE est ensuite comprimé dans la direction dans laquelle des caractéristiques de récupération rapide sont souhaitées et retenu pendant un laps de temps suffisant pour atteindre les caractéristiques souhaitées de récupération rapide.

5. Un article selon la revendication 4 dans lequel le PTFE a ensuite été comprimé d'au moins 50%, ou 60%, ou 75%, ou 90% dans la direction des caractéristiques de récupération rapide souhaitées.

6. Un article selon l'une quelconque des revendications 1 à 5, dans lequel la récupération rapide dudit article est supérieure à 6%, ou 8%, ou 10%, ou 15%, ou 20%, ou 22%, ou 25%, ou 30%, ou 50%, ou 75%.

7. Un article selon la revendication 4, dans lequel l'article est en forme de tube, caractérisé en ce que
   (a) le tube a été comprimé à moins de 50% de sa longueur d'origine et retenu;
   (b) le tube a été chauffé à une température élevée pendant un laps de temps;
   (c) ledit tube a ensuite été refroidi; et
   (d) ledit tube a été étiré à peu près à sa longueur d'origine en présentant une récupération rapide dépassant environ 5,5%.

8. Un article selon une revendication précédente quelconque, dans lequel la forme de l'article est un tube à surfaces intérieure et extérieure lisses.

9. Un article selon l'une quelconque des revendications 1 à 7, dans lequel la forme de l'article est un tube dans lequel les caractéristiques superficielles de la surface intérieure et de la surface extérieure sont différentes.

10. Un article selon une revendication précédente quelconque, dans lequel l'article est une greffe vasculaire.

11. Un article selon l'une quelconque des revendications 1 à 7, dans lequel l'article a été réalisé sous forme de tube et a ensuite été fendu longitudinalement et ouvert pour former une feuille.

12. Un article selon l'une quelconque des revendications 1 à 6, dans lequel la forme de l'article est une feuille, une tige, une pellicule ou un filament.

13. Un procédé de fabrication d'une matière poreuse en PTFE à récupération rapide comprenant les étapes consistant à extruder une billette préformée en un mélange d'une dispersion coagulée de PTFE et de lubrifiant liquide, mettre en expansion ladite matière après enlèvement du lubrifiant liquide en étirant longitudinalement ladite matière afin de produire une microstructure de noeuds interconnectés par des fibrilles, caractérisé en ce que le processus comprend une compression, dans la direction de ces fibrilles, dudit PTFE extrudé et mis en expansion afin de réduire sa dimension et une retenue dudit

14

PTFE dans son état comprimé pendant un laps de temps suffisant pour atteindre une caractéristique souhaitée de récupération rapide supérieure à environ 5,5%.

14. Un procédé selon la revendication 13 dans lequel ledit PTFE comprimé est chauffé à une température élevée.

15. Un procédé selon la revendication 14, dans lequel ledit PTFE comprimé est chauffé à une température supérieure à son point de fusion cristalline.

16. Un procédé selon l'une des revendications 13 ou 14, dans lequel le PTFE est en forme de tube, comprenant les étapes consistant à :
    (a) comprimer ledit tube et le retenir à une longueur inférieure à environ 50% de sa longueur d'origine;
    (b) maintenir le tube dans un état comprimé et retenu pendant un laps de temps; et
    (c) étirer le tube à peu près à sa longueur d'origine.

## FIG. 1
PRIOR ART

DIRECTION OF EXPANSION

## FIG. 2

DIRECTION OF EXPANSION

DIRECTION OF COMPRESSION

## FIG. 7

DIRECTION OF
COMPRESSION

## FIG. 3
PRIOR ART

DIRECTION OF EXPANSION

## FIG. 4

DIRECTION OF EXPANSION

DIRECTION OF COMPRESSION

## FIG. 5
PRIOR ART

## FIG. 6

18

## FIG. 8

## FIG. 9

## FIG. 10

## FIG. 11

## FIG. 12

## FIG. 13